# EUROPÄISCHE PATENTANMELDUNG

(11) **EP 1 449 430 A1**
(43) Veröffentlichungstag der Anmeldung: **25.08.2004**
(21) Anmeldenummer: 04001305.4
(22) Anmeldetag: 22.01.2004
(51) Int. Cl.: A01K 15/02

(54) **Führungsanlage für Pferde**

(30) Priorität: 18.02.2003 DE 10306667; 02.07.2003 DE 10329891
(71) Anmelder: Häring, Theo, 79802 Dettighofen (DE)
(72) Erfinder: Häring, Theo, 79802 Dettighofen (DE)
(74) Vertreter: Patentanwälte Feldmann & Partner AG

(57) **Zusammenfassung**

Die Erfindung betrifft eine Führungsanlage zum reiterlosen Trainieren von Pferden, Kamelen und anderen Tieren. Bei der neuen Führungsanlage 1 ist eine Fahrschiene 2 über dem Trainingsparcour 11 aufgehängt. Auf respektive an oder unter dieser Fahrschiene 2 fährt ein Führungsgitterzug 3 wie eine Hängebahn.

## Beschreibung

Die Erfindung betrifft eine Führungsanlage zum reiterlosen Trainieren von Pferden, Kamelen und anderen Tieren nach dem Oberbegriff des unabhängigen Patentanspruches.

Auf dem Markt sind Freilaufführungsanlagen zum Trainieren von Pferden erhältlich, welche auf offenem Feld oder in einer Art Halle, überdacht, montiert werden. Sie besteht aus einer kreisförmigen Longierbahn, welche auch als Hufschlag bezeichnet wird. Statt an einer Longe vom Mensch geführt, werden Pferde durch eine Vorrichtung auf dieser Longierbahn geführt. Diese Vorrichtung besteht wie ein Karussell aus einem Drehstern, welcher radial von einem Drehzentrum nach aussen ragende Tragarme aufweist. An jedem Tragarm hängt an seinem radial äusseren Bereich ein Führungsgitter nach unten. Jedes Führungsgitter besteht aus einem Rahmen, welcher mit einem Metallgitter bespannt ist. Die Pferde müssen in einem Pferdeführungsbereich zwischen je zwei benachbarten Führungsgittern auf der Longierbahn nach gegebener Geschwindigkeit rundum laufen. Die Longierbahn ist so breit, dass die Pferde sich umdrehen können, wenn die Drehrichtung der Vorrichtung gewechselt wird. Die Führungsgitter können elektrisch geladen werden, damit die Pferde nicht in Versuchung kommen, die ganze Anlage durch Körpereinsatz abzubremsen. Die Führungsgitter dieser Anlagen weisen ein grosses Gewicht auf. Da diese Führungsgitter an den Tragarmen der sternförmigen Tragkonstruktion hängen, kommen sie gerne in Schwingungen und belasten die Tragkonstruktion wegen den grossen Hebelarmen enorm. Dauerschwingbrüche in der Tragkonstruktion sind die Folge. Zu trainierende Pferde neigen dazu, mit ihren Hufen an diese Gitter zu schlagen und sie dadurch zu zerstören. Eine derartige Freilaufführungsanlage ist beispielsweise aus DE 28 52 777 A1 bekannt.

DE 197 46 562 zeigt eine andere Ausführung einer Freilaufführungsanlage zum Trainieren von Pferden mit einer kreisförmigen Longierbahn. Diese ist innenseitig und aussenseitig mit je einem Zaun oder einer Wand begrenzt und mit einer Konstruktion mit Trägern zum Tragen eines Daches überdacht. Im Bereich der Longierbahn ist an einem Träger eine Tragkonstruktion herabhängend angeordnet. Am unteren Ende der Tragkonstruktion ist beidseitig je ein Stützrad angebracht. Die Stützräder stehen im Winkel zueinander und greifen von schräg unten an einem umlaufenden Profilring an. Die Stützräder führen und tragen den umlaufenden Profilring. Ein Antriebsmotor wirkt über ein Antriebsrad auf den Profilring und treibt diesen an. Am Profilring sind in regelmässigen Abständen bekannte Führungsgitter hängend angebracht. Jedes Führungsgitter besteht aus einem Rahmen, welcher mit einem Metallgitter bespannt ist. Dieses System zeigte erhebliche dynamische Probleme auf, welche durch die Grösse und die Masse der Führungsgitter entstehen. Diese äussern sich im Erzeugen von Lärm, Erschütterungen und unregelmässigem Lauf der Freilaufführungsanlage.

Der grosse Nachteil aller dieser Anlagen besteht darin, dass nur kreisförmige Trainingsbahnen damit ausgerüstet werden können. Zusätzlich ist der Durchmesser einer solche Trainingsstrecke beschränkt, da die massive Konstruktion sonst sehr schwer wird. Die Gefahr von Spannungsrissen in den Bauteilen wird bei einer grossen Anlage erheblich, denn die nicht vermeidbaren Vibrationen wirken sich verstärkt in der Materialbelastung aus.

Aufgabe der Erfindung ist es, eine Pferdeführanlage anzugeben, bei der die bewegte Masse im Verhältnis zur Grösse der Anlage klein ist. Zudem soll statt nur einer kreisrunden Trainingsbahn eine ovale betrieben werden können, welche damit auch einen bedeutend längeren Trainingsumlaufparcours ermöglicht.

Diese Aufgabe wird durch die Erfindung gemäss unabhängigem Patentanspruch gelöst.

Ein zusätzlicher Vorteil der Erfindung besteht darin, dass nicht nur Ovale, sondern annähernd jede Form von Trainingsstrecken auch mit sehr langen Umlaufparcours möglich werden. Im Prinzip sind sogar Kreuzungen und Abzweigungen nach dem neuen System machbar.

Die Erfindung wird nachstehend im Zusammenhang mit den Zeichnungen beschrieben. Es zeigen:
- Figur 1: eine Pferdeführungsanlage gemäss Erfindung mit einem annähernd ovalen Trainingsparcours;
- Figur 2: eine schematische Ansicht auf einen Führungsgitter-Zug;
- Figur 3: eine Ansicht im Bereich eines Traggestelles mit der Fahrschiene;
- Figur 4: eine Ansicht eines Laufwagens quer zur Fahrschiene;
- Figuren 4a,4b: zwei Varianten Laufwagen in Seitenansicht;
- Figur 5: eine schematische Anordnung eines Triebwagens.

Alle bisherigen Führungsanlagen zum reiterlosen Trainieren von Pferden beruhen auf dem Prinzip eines Karussells. Führungsgitter sind an einer kreisförmigen drehbaren Konstruktion aufgehängt.

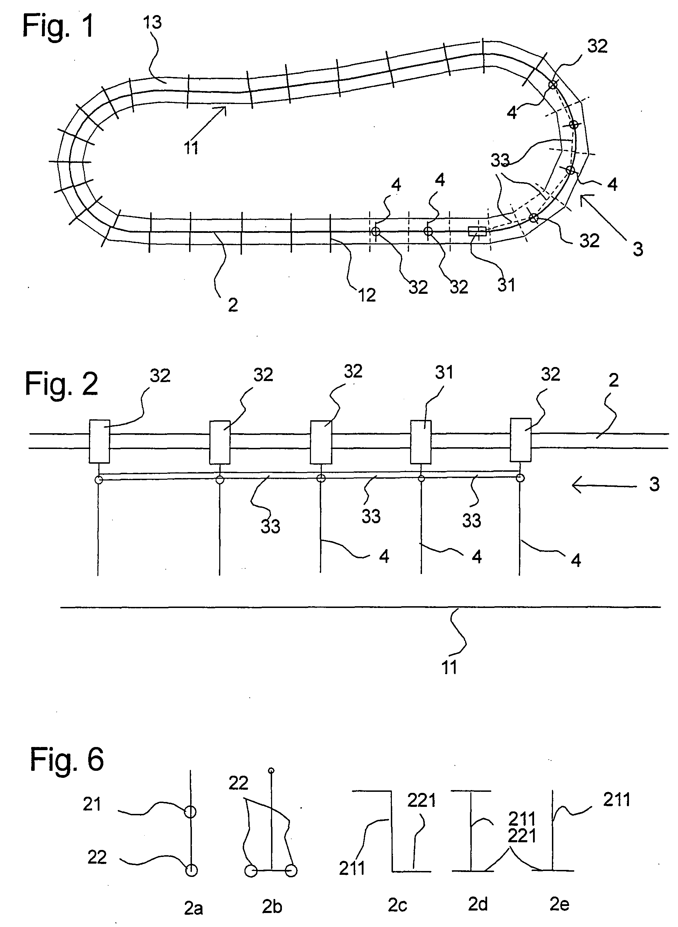

Der Grundgedanke der Erfindung steht vollständig im Gegensatz dazu, was aus der Figur 1 klar ersichtlich ist. Bei der neuen Führungsanlage 1 ist eine Fahrschiene 2 über dem Trainingsparcour 11 aufgehängt. Auf respektive an oder unter dieser Fahrschiene 2 fährt eine Führungsgitterzug 3 wie eine Hängebahn.

Entlang des Trainingsparcours sind Tragrahmen 12 in annähernd regelmässigen Abständen angeordnet. An diesen Tragrahmen 12 ist die Fahrschiene 2 hängend befestigt. Die Fahrschiene 2 befindet sich üblicherweise über der Mitte der Laufbahn für die Pferde. Die Tragrahmen 12 können ein Arkadendach 13 tragen, so dass der ganze Trainingsparcour auf einfache Art gedeckt verlaufen kann. Die Tragrahmen 12 fixieren die Fahrschiene 2 etwa 3 m oder höher über der Trainingsbahn.

An der Fahrschiene 2 fährt nun ein Führungsgitterzug 3 den Trainingsparcours ab. Der Führungsgitterzug 3 besteht aus Antriebswagen und Laufwagen. An diesen Wagen sind die bekannten Führungsgitter hängend befestigt. Der schematisch dargestellte Führungsgitterzug 3 , siehe Figur 2, weist einen Antriebswagen 31 und eine Mehrzahl von Laufwagen 32 auf. In der dargestellten Variante ist jeder zweite Laufwagen 32 mit einem Führungsgitter 4 versehen. Laufwagen 32 und Antriebswagen 31 sind je mittels einer Kupplungsstange oder Seilzug 33 gekuppelt und in konstantem Abstand voneinander gehalten. Typische Abstände zwischen Wagen mit Führungsgittern 4 betragen beispielsweise 8 m und zwischen zwei benachbarten Wagen 4 m. Dadurch ist die Stabilität des Führungsgitterzuge 3 auch bei relativ engen Kurven gewährleistet.

Der Führungsgitterzug 3 fährt nun entlang der Fahrschiene 2 den Trainingsparcours ab. Eine Stromleitschiene grundsätzlich bekannter Art ist im Bereich der Fahrschiene angeordnet. Der Antriebswagen 31 ist mit Stromabnehmern dazu ausgerüstet. Fahrtrichtung und Geschwindigkeit können nach bekannter Art geregelt werden. Dabei kann sich die Steuerung selbst zentral bei der Stromzufuhr zu den Stromleitschienen oder im Antriebswagen 31 selbst befinden.

Aus dem Prinzip des Führungsgitterzuges 3 ist offen ableitbar, dass der Trainingsparcour grundsätzlich verschienende Formen aufweisen kann und auch nicht an ein Oval gebunden ist. Es können Kurven mit wechselndem Radius gebaut werden. Es ist sogar eine offene Trainingsstrecke machbar, mit zwei Endstationen, wo dann der Führungsgitterzug die Fahrtrichtung umkehren muss. Ebenso können Abzweigungen mit Weichen in der Fahrschiene gebaut werden. Dies ermöglicht ganz neue Trainingsvariationen für Pferde, Kamele und andere Tiere.

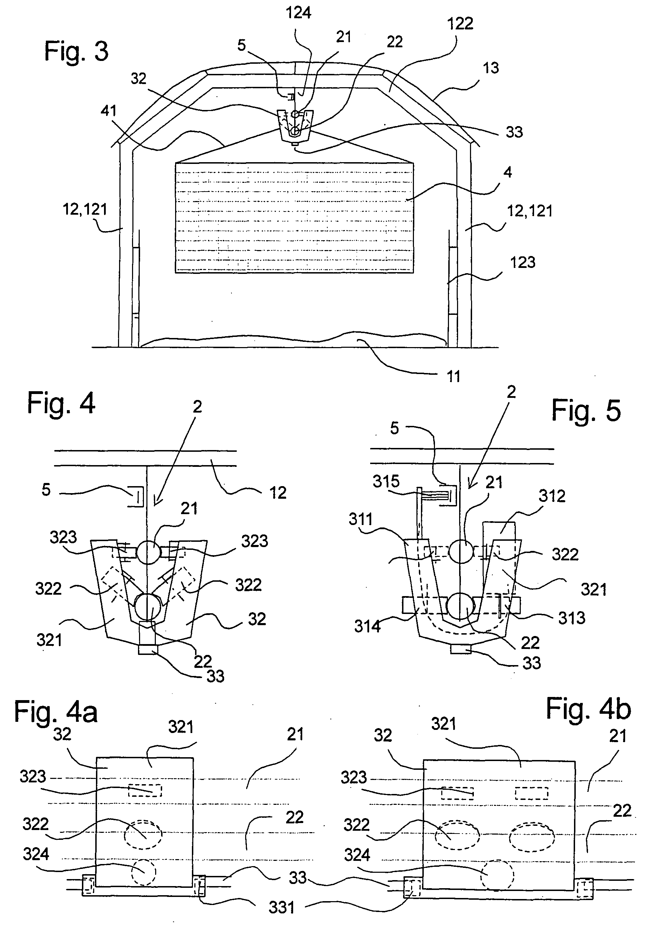

In Figur 3 ist ein Tragrahmen 12 in Ansicht gezeigt. Es weist zwei parallele Stützen 121 auf, welche oben mittels Bügel 122 verbunden sind. Die parallelen Stützen 121 sind am Boden seitlich neben der eigentlichen Trainingsbahn befestigt. An ihnen kann ein Zaun oder ein Hufschlagschutz 121 angebracht sein. Am Bügel 122 befindet sich eine Aufhängung 124 für die Fahrschiene 2. Die Lage eines Führungsgitters 4 während der Durchfahrt des Führungsgitter-Zuges 3 (nicht dargestellt) ist gut ersichtlich. Verschiedene Arten von Führungsgittern entsprechend dem Stand der Technik können verwendet werden. Sie können während dem Betrieb auch elektrisch geladen sein. Selbstverständlich kann das Traggestell auch asymmetrisch sein und nur eine seitliche Stütze 121 und einen einseitig ausladenden Bügel 122 aufweisen.

Ein Laufwagen 32 ist in der Figur 4 von vorne gezeigt. Die Fahrbahn besteht hier aus einem Führungsprofil 21 oben und im Abstand darunter einem Tragprofil 22. Beide sind hier als Profilstäbe mit rundem Querschnitt gezeigt. Der Laufwagen 32 hat nun ein Chassis 321, welches beide Profile der Fahrbahn teilweise umfasst. Das Chassis hat hier ungefähr eine U-Form, welche unterhalb des Tragprofils geschlossen ist. Zwei Tragräder 322 sind in einem Winkel von zwischen 60° und 90° zueinander so angeordnet, dass sie mit ihren Laufflächen im entsprechenden Winkel auf der Oberfläche des Tragprofils 22 rollen. Im Bereich der freien Schenkel der U-Form des Chassis 321 befindet sich beidseits je ein Stützrad 323 als Stabilisator. Die Stützräder 323 rollen einander gegenüberliegend auf seitlich am Führungsprofil 21 der Fahrschiene 2. Dies verhindert ein Pendeln des Laufwagens 32 quer zur Fahrschiene 2. Über die Aufhängung am Laufwagen 32 wird indirekt auch ein seitwärts Pendeln der Führungsgitter 4 verhindert. Eine Sicherheitsrolle 324 kann im Chassis 32 so angeordnet sein, dass sie von unten an der Tragschiene 22 läuft. Sie dient der Sicherung des Laufwagens gegen abheben von der Schiene 2.

Ein Laufwagen in Seitenansicht nach Figur 4a ist mit je einem Tragrad 322 und einem Stützrad 323 auf jeder Seite (siehe Figur 4) möglich. Für ruhigeren Lauf sorgt eine Ausführung nach Figur 4b, wo je zwei Tragräder 322 und zwei Stützräder 323 auf jeder Seite hintereinander angeordnet sind. Die Kupplungsstangen 33 sind mittels einer seitwärts schwenkbaren Kupplung 331 am Laufwagen 32 und natürlich auch am Antriebswagen 31 befestigt. Grundsätzlich genügt ein einfacher Kupplungsstift als Verbindung. Es kann aber von Vorteil sein, hier eine kardanische Kupplung oder ein Gummielement zu verwenden.

Ein Antriebswagen 31 gemäss Figur 5 ist im Prinzip gleich aufgebaut. Das Chassis 311 des Antriebwagens 31 entspricht grundsätzlich demjenigen des Laufwagens 32. Ein Motor 312 ist an einem Chassis 311 seitlich angeordnet. Er treibt ein Antriebsrad 313, welches von der Seite annähernd horizontal am Tragprofil 22 der Fahrschiene läuft. Gegenüber dem Antriebsrad 313 am anderen Schenkel des Chassis 311 befindet sich ein Gegendruckrad 314. Es drückt unter Federbelastung gegen das Tragprofil 22 und garantiert die notwendige Adhäsion für das Antriebsrad. Alternativ können auch zwei Antriebsräder 313 mit zwei Motoren einander gegenüberliegend angeordnet sein. Stützräder 322 und Sicherheitsrad 324 analog zu denjenigen des Laufwagens können bei Bedarf vorhanden sein. Solange kein Führungsgitter 4 unterhalb des Antriebswagens 31 befestigt ist, erübrigen sich allerdings die Stützräder. Am Antriebswagen ist ein Stromabnehmerteil mit Schleifkontakten vorhanden. Die Schleifkontakte fahren Stromschienen entlang, welche seitlich neben der Fahrschiene 2 oder oberhalb an der Aufhängung der Fahrschiene 2 entlang dem ganzen Parcours angeordnet sind. Als Stromschiene und Schleifkontakte werden solche verwendet, wie sie für Laufkatzen und Kranbahnen altbekannt sind und ab Stange bezogen werden können.

Ein Führungsgitterzug 3 umfasst mindestens einen Antriebswagen 31. Die Anzahl der Laufwagen 32 kann gewählt werden. Antriebswagen 31 und Laufwagen 32 sind untereinander gekuppelt mit Kupplungsstangen oder Seilzügen 33. Die Kupplungsstangen 33 halten die Fahrgestelle in festem Abstand zueinander und übertragen alle Zugkräfte und auch allenfalls Bremskräfte von Wagen zu Wagen. Somit befinden sich benachbarte Führungsgitter 4 immer in vorbestimmtem Abstand zueinander. Am Führungszug können weitere Laufwagen 32 oder auch Antriebswagen 31 angehängt werden.

Verschiedene geeignete Ausführungsformen von Tragschienen 2 sind in der Figur 6 gezeigt. Es eignen sich verschiedene Profilquerschnitte, wie T-Form, Doppel-T-Form, Doppelwinkel-Form und ähnlichen. Diese Profilquerschnitte weisen jeweils eine Tragfläche 221 und eine Stützfläche 211 auf. Auf den Tragflächen 221 rollen die Tragräder 322 der Laufwagen 32 und allenfalls auch die Triebräder 313 der Antriebswagen 31. An den Stützflächen rollen die Stützräder 322 der Laufwagen und allenfalls die Triebräder 313 und die Gegendruckräder 314 ab.

Besonders geeignet für leichten Lauf des Führungsgitterzuges 3 ist eine Ausführung von zwei Rundprofilen übereinander. Die Rundprofile werden mit der Aufhängung am Traggestell 12 auch mit sich selbst verbunden befestigt. Bei einer Anordnung von zwei Rundprofilen nebeneinander werden diese mit regelmässigen Querstreben gegeneinander befestigt. Die Tragschiene nach dieser Art wird dann wie eine Eisenbahn-Fahrleitung in regelmässigen Abständen an einem Tragseil aufgehängt, welches wiederum an den Traggestellen befestigt wird. Die Antriebswagen 31 und die Laufwagen 32 rollen auf dieser Tragschiene wie eine Gondelbahn mit selbstfahrenden Gondeln. Bei dieser Ausführung erübrigen sich sogar die Gegendruckräder 314, denn die Adhäsion für die Triebräder 313 wird durch das Eigengewicht der Treibwagen unterstützt.

Diese Art von Führungsgitterzug 3 kann so viele Laufwagen 32 und Antriebswagen 31 aufweisen, wie benötigt werden. Die dargestellte Ausführung macht nun eine annähernd beliebige Form der Trainingsbahn möglich. Sie muss nicht einmal in sich geschlossen sein, denn die Fahrtrichtung kann umgesteuert werden. So wird auch ein Trainingsparcours über mehrere Kilometer mit Kurven und geraden Teilstücken, mit und ohne Steigungen möglich.

### Bezeichnungsziffern:

- 1: Führungsanlage
- 2: Fahrschiene
- 11: Trainingsparcour
- 3: Führungsgitterzug
- 12: Tragrahmen
- 13: Arkadendach
- 31: Antriebswagen
- 32: Laufwagen
- 33: Kupplungsstange oder Seilzug
- 121: Stützen
- 122: Bügel
- 121: Hufschlagschutz
- 124: Aufhängung
- 21: Führungsprofil
- 22: Tragprofil
- 221: Tragfläche
- 322: Tragräder
- 323: Stützrad
- 234: Sicherheitsrolle
- 331: Kupplung
- 321: Chassis
- 312: Motor
- 313: Antriebsrad
- 314: Gegendruckrad
- 315: Schleifkontakte
- 211: Stützfläche

## Patentansprüche

1. Führungsanlage zum reiterlosen Trainieren von Pferden, Kamelen und anderen Tieren mit einer Anzahl auf einer Trainingsbahn umlaufenden Führungsgittern (4), welche sich in einem Abstand voneinander befinden, und einer Antriebsvorrichtung, **dadurch gekennzeichnet, dass**
im Abstand über der Trainingsbahn eine Fahrschiene (2) vorhanden ist, und mit einem Führungsgitterzug (3), bestehend entweder aus einer Mehrzahl miteinander gekuppelten Antriebwagen (31) oder aus mindestens einem Antriebswagen (31) und einer Anzahl mit ihm gekuppelten Laufwagen (32), und dass der Führungsgitterzug (3) an der Fahrschiene (2) hängend entlang fahrbar ist, wobei die Führungsgitter (4) an den Laufwagen (32) und/oder an den Antriebswagen (31) aufgehängt sind.

2. Führungsanlage nach Anspruch 1, **dadurch gekennzeichnet, dass** der Antriebswagen (31) einen Motor aufweist, welcher ein Antriebsrad (313) antreibt, wobei das Antriebsrad (313) an der Fahrschiene (2) anliegt.

3. Führungsanlage nach Anspruch 2, **dadurch gekennzeichnet, dass** ein Gegendruckrad (314) vorhanden ist, welches mittels Gegendruck die Adhäsion des Antriebsrades (313) sichert.

4. Führungsanlage nach Anspruch 1, **dadurch gekennzeichnet, dass** der Laufwagen (32) mindestens ein Tragrad (322) aufweist, welches das Gewicht des Laufwagens (32) und, falls vorhanden, des Führungsgitters (4) auf die Fahrschiene (2) abstützt.

5. Führungsanlage nach Anspruch 4, **dadurch gekennzeichnet, dass** der Laufwagen (32) Stützräder (323) aufweist, welche beidseitig so an der Fahrschiene (2) anliegen, dass eine Bewegung des Laufwagens (32) quer zur Fahrschiene (2) verhindert wird.

6. Führungsanlage nach Anspruch 1, **dadurch gekennzeichnet, dass** eine Stromschiene im Bereich der Fahrschiene (2) vorhanden ist, und dass der Antriebswagen (31 ) mit einem Stromabnehmer (315) ausgerüstet ist.

7. Führungsanlage nach Anspruch 1, **dadurch gekennzeichnet, dass** die Fahrschiene (2) zwei voneinander beabstandete Rundprofile umfasst, wobei mindestens eines dieser Rundprofile eine Tragprofil (22) ist, auf welchem die Tragräder (322) laufen.

8. Führungsanlage nach Anspruch 5, **dadurch gekennzeichnet, dass** die Fahrschiene (2) ein Profilstab ist und eine Stützfläche (211) bildet, an welcher die Stützräder (323) der Laufwagen (32) abrollen, und eine Tragfläche (221) bilden, auf welcher die Tragräder (322) der Laufwagen (32) und/oder die Treibräder (313) der Antriebswagen (31) rollen.
